**Europäisches Patentamt**

**European Patent Office**

**Office européen des brevets**

(19)

(11) Veröffentlichungsnummer: **0 186 003**
**A2**

(12) # EUROPÄISCHE PATENTANMELDUNG

(21) Anmeldenummer: **85115506.9**

(22) Anmeldetag: **06.12.85**

(51) Int. Cl.⁴: **B 29 C 45/07**

(30) Priorität: **28.12.84 DE 3447597**

(43) Veröffentlichungstag der Anmeldung:
**02.07.86 Patentblatt 86/27**

(84) Benannte Vertragsstaaten:
**AT CH DE FR GB IT LI NL**

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich Dr.**
**Westliche 24**
**D-7530 Pforzheim(DE)**

(54) **Spritzgiesseinheit für eine Kunststoff-Spritzgiessmaschine.**

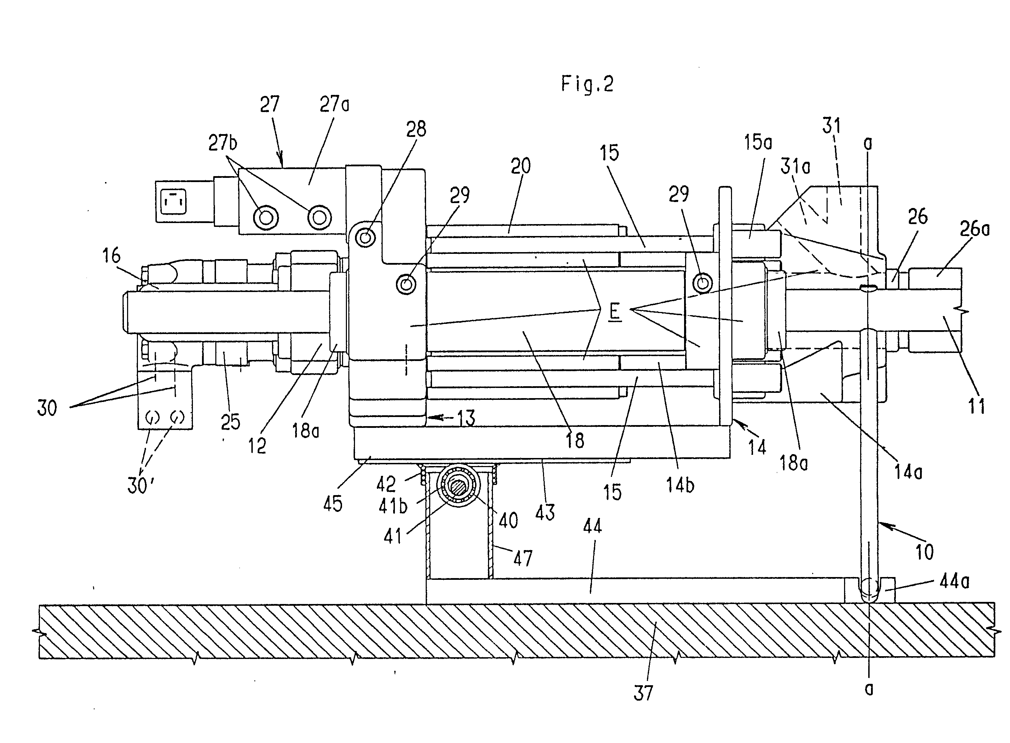

(57) Die Spritzgießeinheit mit auf stationären Säulen (11) verfahrbaren Trägerbrücken (13; 14) für Plastifizierzylinder (26) und Förderschnecke sowie mit einem zentralen Einspritzzylinder (20) und hierzu diametralen Fahrzylindern (18) ist mit einer Stützvorrichtung zum Abstützen der Spritzgießeinheit auf den Maschinenfuß (37) der Kunststoff-Spritzgießmaschine versehen. Die Stützvorrichtung umfaßt ein stationäres Stützteil (44, 47) und ein fahrbares Stützteil (43, 45) sowie eine die Stützlast übertragende Einrichtung (41) zur Höhenverstellung. Das fahrbare Stützteil (43, 45) ist an wenigstens einer der Trägerbrücken (13, 14) befestigt. Bei einer solchen Ausbildung sind die Durchbiegungen der Säulen beim Spritzbetrieb nahezu unterbunden (Fig. 2).

./...

EP 0 186 003 A2

Fig.2

PATENTANWÄLTE
DR. FRIEDRICH E. MAYER
DIPL.-PHYS. G. FRANK
WESTLICHE 24
7530 PFORZHEIM

– 1 –

Spritzgießeinheit für eine Kunststoff- Spritzgießmaschine.

Die Erfindung betrifft eine Spritzgießeinheit für eine Kunststoff-Spritzgießmaschine entsprechend dem Oberbegriff des Patentanspruchs 1.

Bekannte Spritzgießeinheiten dieser Art ( z.B. DE- OS en
20 20 337; 30 13 426; 29 07 556 – Fig. 2 ; DE-AS 1 961 819)
sind ausschließlich über ihre Säulen, also über stationäre
Bauteile abgestützt. Dabei greifen die Stützelemente, insbesondere Stützkufen  an den rückseitigen Enden der Säulen
an, wobei in jedem Fall der axiale Abstand zwischen den vorderen und rückseitigen Abstützpunkten an den Säulen so groß
ist, daß der Vorwärts- bzw. Rückwärtshub Fahrzylinder und
des Einspritzzylinders bzw. der Einspritzzylinder möglich ist.

Bei der Spritzgießeinheit nach der DE- OS 20 20 337 ist zusätzlich an der Trägerbrücke für den Plastifizierzylinder ein
Gleitfuß befestigt. Dieser befindet sich jedoch bei in Arbeitsposition befindlicher Spritzgießeinheit im Abstand von der Oberfläche des Maschinenfußes der Kunststoff-Spritzgießmaschine.
Dieser Gleitfuß kann daher nur die aus ihrer Arbeitsposition
gerückte Spritzgießeinheit abstützen. Er ist insoweit lediglich
ein Hilfsmittel für den Abtransport der Spritzgießeinheit.

Es hat sich gezeigt, daß bei einer intensiven Benutzung der in Betracht gezogenen bekannten Spritzgießeinheiten über lange Zeiträume die Führungsgenauigkeit nachlässt, was sicherlich von den rhythmischen Durchbiegungen der durch die Spritzgießeinheit belasteten Säulen bei den Spritzzyklen herrührt. Dies wirkt sich zum Beispiel dann nachteilig aus, wenn die Düse der Spritzgießeinheit an der Bildung des Formhohlraumes der Spritzgießform teilhat.

Der Erfindung liegt die Aufgabe zugrunde, eine Spritzgießeinheit der eingangs genannten Gattung derart weiterzubilden, daß die rhythmischen Durchbiegungen der Säule, insbesondere auch bei schweren Spritzgießeinheiten ohne eine Überdimensionierung dieser Säulen wesentlich vermindert ist.

Diese Aufgabe wird erfindungsgemäss durch die im Kennzeichen des Patentanspruches 1 genannten Merkmale gelöst.

Bei einer solchen Ausbildung ist es möglich, die rückwärtige Abstützung der Spritzgießeinheit wesentlich nach vorne und zwar in die Nähe des Schwerpunktes der Spritzgießmaschine zu verlegen, weil die Fahrzylinder bei der Wahl des optimalen Abstützungspunktes nicht mehr berücksichtigt werden müssen. Auf diese Weise sind die Säulen dank einer dem Schwerpunkt der Spritzgießeinheit angenäherten Abstützung weitgehend von ihrer Trägerfunktion befreit.

Diese Entlastung der Säulen wird noch verbessert, wenn eine mit Dekompressionszylindern ausgerüstete Spritzgießform entsprechend Patentanspruch 9 ausgebildet und dadurch der nach rückwärts über die Abstützpunkte der Stützvorrichtung überstehende Teil der Spritzgießeinheit wesentlich verkürzt und insbesondere an der beide Trägerbrücken umfassenden baulichen Einheit und nicht an den Säulen abgestützt ist.

- 3 -

Bei einer solchen Ausbildung dienen außerdem Tauchkolben der Dekompressionszylinder der Dekompressionseinrichtung als Drehsicherung für den Rotationsmotor. Dadurch wird eine gesonderte Einrichtung zur Drehsicherung eingespart, welche die Spritzgießeinheit rückseitig zusätzlich belasten würde.

Dekompressionszylinder ermöglichen es, Spritzgießeinheiten mit einer offenen, d.h. nicht verschließbaren Düse, zwecks Unterbrechung der Wärmeübertragung auf die Spritzgießform bei jedem Spritzzyklus befristet von der Spritzgießform abzusetzen, wobei das plastische Material im Plastifizierlinder durch einen entsprechenden Rückwärtshub der Dekompressionszylinder von seinem Überdruck befreit ist.

Eine weitere Verminderung der rhythmischen Durchbiegungen der Säulen ergibt sich bei einer Ausbildung entsprechend dem Patentanspruch 5 als einer gewichtsvermindernden Maßnahme.

Nachstehend wird die Erfindung anhand der Zeichnungen an einem Ausführungsbeispiel erläutert.

Die

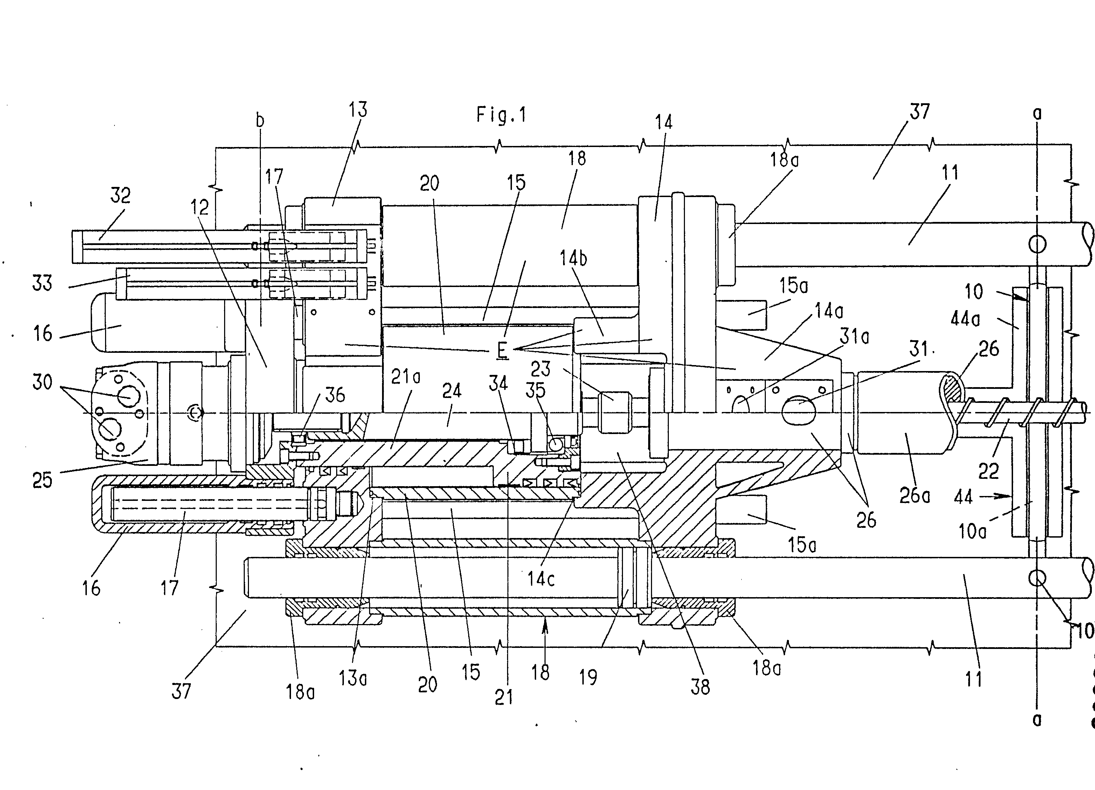

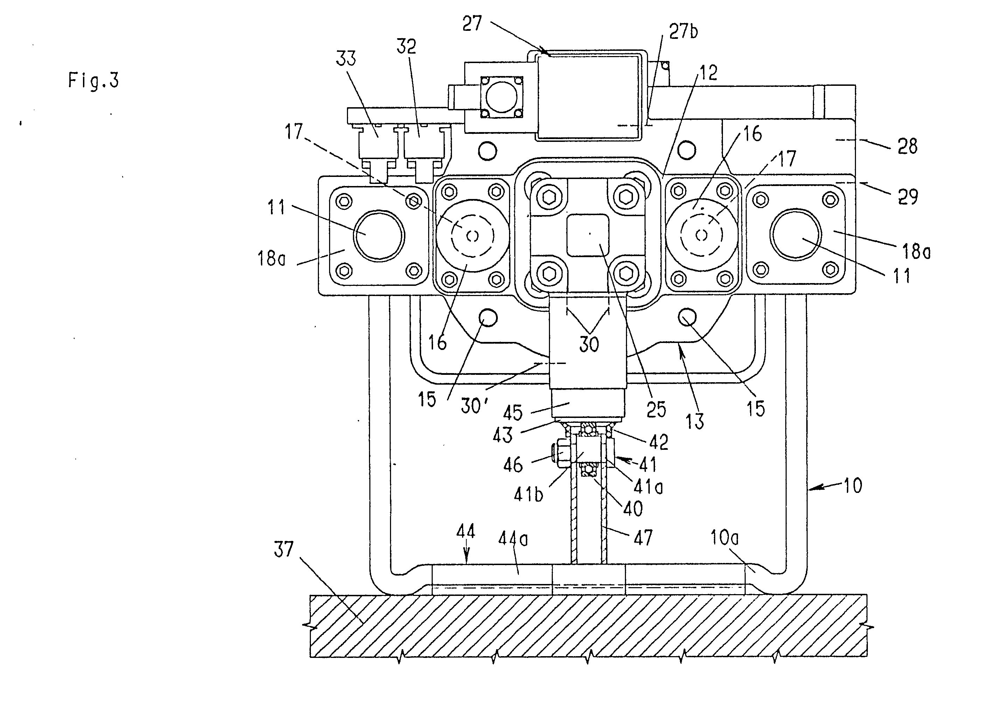

Figuren 1 bis 3    zeigen die Spritzgießeinheit in Draufsicht, in Seitenansicht und in Rückansicht.

Die Spritzgießeinheit umfaßt eine auf den Säulen 11 eines Säulenpaares verschiebbare Trägerbrücke 14 für den mit Förderschnecke 22 und Heizmanschetten 26a ausgerüsteten Plastifizierzylinder 26. Der Plastifizierzylinder ist in einer zentralen Bohrung der Trägerbrücke 14 aufgenommen, die dank einer sich nach vorne erstreckenden Anformung 14a axial verlängert ist. Die Spritzgießeinheit weist ferner einen in der Spritzachse liegenden einseitig beaufschlagbaren hydraulischen Einspritzzylinder 20,21 für den Einspritzhub der Förderschnecke 22 auf. Der Zylinder 20 des Einspritzzylinders 20,21 ist in entsprechenden Ringschultern 14c von diametral zur Spritzachse liegenden Ausformungen 14b zentriert, die einen vertikalen Schacht 38 in der Trägerbrücke 14 begrenzen. Rückseitig ist der Zylinder 20 in einer weiteren Trägerbrücke 13 an Ringschultern 13a zentriert. Zwei hydraulische Fahrzylinder 18,19 zum Verfahren, also zum Auf- und Absetzen der Spritzgießeinheit auf die Spritzgießform sind diametral zum Einspritzzylinder 20, 21 und koaxial zu den Säulen 11 angeordnet. Die Fahrkolben 19 sitzen auf den Säulen 11 fest auf. Die Achsen der Zylinder 18 und des Zylinders 2o liegen in einer Ebene. Außerdem sind Dekompressionszylinder 16,17 für einen Rückhub der Förderschnecke vorgesehen.

Die Förderschnecke bildet mit ihrem koaxialen Rotationsmotor 25, mit dem Kolben 21 des Einspritzzylinders 20,21 und mit den Zylindern 16 der Dekompressionszylinder 16,17 eine axiale Bewegungseinheit. Die Zylinder 20,18 von Einspritzzylinder 20,21 und Fahrzylindern 18,19 bilden mit den beiden Trägerbrücken 13,14 eine bauliche Einheit E, die über die Zylinderdeckeln 18a der Fahrzylinder auf den Säulen 11 verschiebbar gelagert ist. Zwei die Tauch-kolben 17 aufweisende Dekompressionszylinder 16,17 sind diametral zum Rotationsmotor 25 angeordnet. Die Tauchkolben 17 sind mit der baulichen Einheit E starr verbunden. Die Zylinder 16 der Dekompressionszylinder 16,17 sind im Flansch 12 des Rotationsmotors 25 verankert. Im zeichnerischen Ausführungsbeispiel sind die Tauchkolben 17 je mit einem vorderseitigen Gewindeabschnitt in die benachbarte Trägerbrücke 13 eingeschraubt. Der Rotationsmotor 25 mit den Anschlüssen 30 für die Pumpenleitung und die Tankleitung ist über die den Kolben 21 mit Kolbenstange 21a durchsetzende Spindel 24 mittels Kupplung 23 mit der Förderschnecke 22 verbunden. Der Einspritzdruck des Kolbens 21 wird über ein Axialdrucklager 34 auf die Spindel 24 und damit auf die Förderschnecke 22 übertragen, welches Axialdrucklager an einem Radialflansch der Spindel anliegt. An der Vorderseite des genannten Radialflansches ist ein kombiniertes Radial-Axial-Drucklager angeordnet, das die Axialkräfte beim Rückzug der Förderschnecke 22 aufnimmt.

Eine Rückdrehsperre 36 verhindert eine unerwünschte Drehbewegung von Spindel 24 und Förderschnecke 22 beim Vorwärtshub. Die beiden Trägerbrücken 13,14 sind mittels Zugstangen 15 miteinander verspannt und dabei gegeneinander durch die Zylinder 18,20 abgestützt und im Abstand voneinander gehalten. Die Anzugsmuttern 15a für die Zugstangen 15 sind, wie aus den Figuren ersichtlich, leicht zugänglich. Die Zylinder 18,20 sind durch Hülsen aus Stahl, die Trägerbrücken 13,14 aus Gußeisen gebildet. Die lichte Weite des Zylinders 20 des Einspritzzylinders 20,21 ist etwa viermal so groß wie die lichte Weite der Zylinder 16 der Dekompressionszylinder 16,17. Die Kupplung 23 zwischen Spindel 20 und Förderschnecke 22 ist über den Schacht 38 zugänglich. Wegmeßsysteme 32 und 33 sind Bestandteile des hydraulischen Steuerungssystems der Spritzgießeinheit. Bei der Vorplastifizierung weicht die aus der rotierenden Förderschnecke 22, der Spindel 24, dem Rotationsmotor 25 und den Zylindern 16 mit Flansch 12 bestehende axiale Bewegungseinheit unter dem Staudruck des vorplastifizierenden Materials bei aufgesetzter Düse zurück. Dabei wird Öl in die sich vergrößernden Zylinderräume der Dekompressionszylinder 16,17 eingesaugt. Der maximale Hub dieser Zylinder entspricht notwendigerweise dem maximalen Hub des Kolbens 21 des Einspritzzylinders 20,21 beim Einspritzen des Kunststoffmaterials in die Spritzgießform bzw. bei der Vorplastifizierung.

Die Spritzgießeinheit ist rückseitig über ihre beiden Trägerbrücken 13 und 14 mittels einer mit Laufrolle 40 versehenen Stützvorrichtung auf dem Maschinenfuß 37 der Kunststoff-Spritzgießmaschine abstützbar. Die Stützvorrichtung weist im zeichnerisch dargestellten Ausführungsbeispiel eine einzige in der vertikalen Symmetrieebene der Spritzgießeinheit gelegene Laufrolle 40 auf, die mittels des Exzenters 41b in der Höhe einstellbar ist. Der Exzenter 41b ist mittels Lagerzapfen 41a in Wandungen der Stützsäule 47 gelagert. Dem Exzenter 41b ist die kugelgelagerte Laufrolle 40 drehbar angeordnet. Durch eine entsprechende Einstellung der Höhe der Stützvorrichtung können Fertigungstoleranzen, die sich auf den Abstand zwischen der Höhe der Stützvorrichtung der Spritzgießeinheit und der Oberfläche des Maschinenfußes auswirken, ausgeglichen werden. Die Stützeinrichtung umfaßt außer der durch ein Hohlprofil gebildeten Stützsäule 47 und dem Exzenter 41b mit Laufrolle 40 eine mit einem gehärteten Band 43 armierte Stützbrücke 45. Diese erstreckt sich zwischen den Trägerbrücken 13,14 und ist an diesen befestigt.

Das Band 43 bildet die Rollbahn für die Laufrolle 40. Bei jedem Aufsetzen bzw. Absetzen der Spritzgießeinheit auf die Spritzgießform bzw. von der Spritzgießform "fährt" die Spritzgießeinheit gewissermaßen auf der Laufrolle 40 in Richtung Spritzgießform bzw. von dieser weg, wobei die wesentliche Last der Spritzgießeinheit über die Stützbrücke 45 mit dem gehärteten Band 43 in die Laufrolle 40 der Stützvorrichtung eingeleitet wird. Die Stützvorrichtung umfaßt somit ein stationäres Stützteil 44,47, ein fahrbares Stützteil 43,45 sowie eine die Stützlast übertragende Einrichtung 41 zur Höhenverstellung. Eine Laufrolle 4o (bzw. Gleitelement) ermöglicht die Relativbewegung zwischen den Stützteilen 44,47;43,45.

Die Stützsäule 47 ist über ein Verbindungsstück 44 mit dem Steg 10a der Auflagekufe 10 lösbar verbunden. Das Verbindungsstück ist T-förmig gestaltet. Auf dem rückwärtigen Ende des Verbindungsstückes ist die Stützsäule 47 befestigt. Querschenkel 44a des Verbindungsstückes 44 sind mit einer Nut versehen, in welche der Steg 10a der Auflagekufe 10 zur Fixierung eintaucht. Daher bildet die Stützvorrichtung mit Verbindungsstück 44 der Spritzgießeinheit ein lose auf dem Maschinenfuß 37 aufliegendes Aggregat. Aus diesem Grunde ist es möglich, nach Lösen der Säulen 11 vom stationären Formträger der Spritzgießmaschine die ganze Spritzeinheit mit samt der Stützvorrichtung auf dem Maschinenfuß zu verschieben. Dies ist beispielsweise von Bedeutung, wenn die Spritzgießeinheit schräg zur Spritzachse gestellt werden soll, um die Förderschnecke aus dem Plastifizierzylinder zwecks Auswechslung ausziehen zu können. Wird die Spritzgießeinheit in eine vertikale Arbeitsposition überführt, so kann die Stützsäule 47 mit Laufrad 40 und Verbindungsstück 44 auf dem Maschinenfuß verbleiben.

Die Ausformung 14a der Trägerbrücke 14 ist Einfallöffnungen 31 und 31a versehen, die bedarfsweise bei horizontaler oder vertikaler Anordnung der Spritzgießeinheit benutzt werden.

Die auf eine stützgerechte Höhe der Laufrolle 40 eingestellte Exzenterwelle 41 wird in ihrer Winkelposition mit Hilfe einer Spannmutter 46 festgelegt, die mit einem mit Gewinde versehenen Lagerzapfen 41a in Eingriff steht. Durch die Spannmutter 46 wird die Exzenterwelle mit den ihr Drehlager bildenden parallelen Wandungen der Stützsäule 47 verspannt, wobei ein Kopf des anderen Lagerzapfens auf die benachbarte Wand der Stützsäule 47 aufgepreßt wird, die im Abstand vom Band 43 endet. Der Spalt zwischen Stützsäule 47 und Band 43 ist durch eine elastische Lippe 42 abgedichtet, die bei Relativbewegung zwischen Spritzgieß-einheit und Stützsäule 47 auf dem Band 43 gleitet.

Patentansprüche

1. Spritzgießeinheit für eine Kunststoff-Spritzgießmaschine mit einer auf Säulen (11) verfahrbaren Trägerbrücke (14) für einen mit einer Förderschnecke (22) ausgerüsteten Plastifizierzylinder (26),
mit wenigstens einem hydraulischen Einspritzzylinder (20,21) für den Einspritzhub der Förderschnecke (22),
mit zwei zu den Säulen (11) koaxialen hydraulischen Fahrzylindern (18,19) zum Verfahren der Spritzgießeinheit, deren Fahrkolben (19) fest auf den am Formträger der Kunststoff-Spritzgießmaschine axial festlegbaren Säulen (11) aufsitzen, wobei die Förderschnecke (22) mit ihrem koaxialen Rotationsmotor (25) ebenfalls von einer auf den Säulen (11) verfahrbaren Trägerbrücke (13) aufgenommen ist,
und mit einer Stützvorrichtung (41-47) zum Abstützen der Spritzgießeinheit auf dem Maschinenfuß (37) der Kunststoff-Spritzgießmaschine,
dadurch gekennzeichnet, daß die ein fahrbares Stützteil (43,45) und ein stationäres Stützteil (44,47) umfassende Stützvorrichtung (41-47) eine die Stützlast übertragende Einrichtung (41) zur Höhenverstellung aufweist, wobei das fahrbare Stützteil (43,45) an wenigstens einer der Trägerbrücken (13;14) befestigt ist.

2. Spritzgießeinheit nach Patentanspruch 1, dadurch gekennzeichnet, daß die Einrichtung (41) zur Höhenverstellung eine die Relativbewegung zwischen dem fahrbaren Stützteil (43,45) und dem stationären Stützteil (44,47) ermöglichende, mittels Exzenter (41b) in der Höhe einstellbare Laufrolle (40) aufweist.

3. Spritzgießeinheit nach Patentanspruch 2, dadurch gekennzeichnet, daß der Exzenter (41b)mit Lagerzapfen (41a) in einer durch ein Hohlprofil gebildeten Stützsäule lagert und von der Laufrolle (40) umschlossen ist.

4. Spritzgießeinheit nach Patentanspruch 2 oder 3, dadurch gekennzeichnet, daß die Laufrolle (40) am stationären Stützteil (44, 47) angeordnet ist und an einem als Rollbahn dienenden Band (43) einer Stützbrücke (45) anliegt, die auf den beiden Trägerbrücken (13,14) abgestützt ist.

5. Spritzgießeinheit nach einem der vorhergehenden Patentansprüche, dadurch gekennzeichnet, daß die Trägerbrücken (13,14) durch die Zylinder (18) der Fahrzylinder (18,19) und durch den Zylinder (20) des Einspritzzylinders (20,21) gegeneinander abgestützt sind und mit diesen Zylindern (18,20) eine bauliche Einheit (E) bilden, wobei die Achsen der Zylinder (18,20) in einer horizontalen Ebene liegen.

6. Spritzgießeinheit nach einem der vorhergehenden Patentansprüche, dadurch gekennzeichnet, daß sie zusätzlich mittels einer Auflagekufe (10) auf dem Maschinenfuß (37) abgestützt ist, welche an den Säulen (11) in einer Ebene (a-a) angreift, die bei auf der Spritzgießform aufgesetzter Spritzgießeinheit unmittelbar vor den vorderseitigen Zylinderdeckeln (18a') der Fahrzylinder (18,19) liegt.

7. Spritzgießeinheit nach Patentanspruch   , dadurch gekennzeichnet, daß die Auflagekufe (10) durch einen U-förmigen Bügel gebildet ist, dessen auf der Oberfläche des Maschinenfußes (37) aufliegender Steg (10a) quer zur Spritzachse verläuft.

8. Spritzgießeinheit nach einem der vorhergehenden Patentansprüche, dadurch gekennzeichnet, daß das stationäre Stützteil (44,47) der Stützvorrichtung über ein Verbindungsstück (44) mit dem Steg (10a) der Auflagekufe (10) lösbar verbunden ist.

9. Spritzgießeinheit nach einem der vorhergehenden Patentansprüche, dadurch gekennzeichnet, daß ihre Dekompressionszylinder (16, 17 ) an der Trägerbrücke (13) für die Förderschnecke (22) befestigte, diametral zum Rotationsmotor (25) angeordnete Tauchkolben (17) umfaßt, die über Zylinder (16), mit dem Rotationsmotor (25) verbunden sind.

Fig.1

Fig.2

Fig.3